# EUROPEAN PATENT APPLICATION

(11) **EP 3 674 874 A1**
(43) Date of publication of application: **01.07.2020**
(21) Application number: 17928017.7
(22) Date of filing: 25.12.2017
(51) Int. Cl.: G06F 3/0487, G06F 3/0484

(54) **TERMINAL**

(30) Priority: 05.10.2017 JP 2017195368
(71) Applicant: NTT DOCOMO, INC., Chiyoda-ku Tokyo 100-6150 (JP)
(72) Inventor: ITOU, Takurou, Tokyo 100-6150 (JP)
(74) Representative: Hoffmann Eitle
(86) International application number: PCT/JP2017/046429
(87) International publication number: WO 2019/069476

(57) **Abstract**

The present invention provides a display apparatus that includes a first screen (11), a second screen (12), a detection unit (100, 103, 104) configured to detect a predetermined event in the terminal, and a display control unit (200) configured to, if an event is detected, when an image of a first application is being displayed on the first screen, display an image of a second application that is associated with the first application on the second screen.

## Description

### Technical Field

The present invention relates to a technique for a user interface.

### Background Art

Patent Document 1 discloses a technique for suitably carrying out arrangement of display regions in a case where multiple identical application programs are started up on a multi-monitor.

### Citation List

### Patent Literature

Patent Document 1: JP 2012-27562A

### Summary of Invention

### Technical Problem

In the case of using a display apparatus having two screens, for example, when a user wishes to display an application on a first screen and further display an application on a second screen, it is convenient if the application can be rapidly made available on the second screen.

In view of this, the present invention aims to rapidly make an application available on a second screen in a display apparatus having two screens.

### Solution to Problem

The present invention provides a terminal including: a first screen; a second screen; a detection unit configured to detect a predetermined event in the terminal; and a display control unit configured to, if an event is detected, when an image of a first application is being displayed on the first screen, display an image of a second application that is associated with the first application on the second screen.

The terminal may also include a main body including a first housing having the first screen, a second housing having the second screen, and a joining portion that foldably joins the first housing and the second housing. The detection unit may also detect the main body reaching a predetermined degree of openness as the event.

Furthermore, the detection unit may also detect the main body further reaching a predetermined inclination as the event.

The terminal may also include an execution unit configured to, if the event is detected and the image of the second application is displayed on the second screen, execute a process associated with the event among processes to be executed by the second application.

The terminal may also include a reception unit configured to receive an operation on a screen selected from among the first screen and the second screen, and to receive an operation using the first screen as a selected screen after the image of the second application is displayed.

Furthermore, the terminal may also include a reception unit configured to receive an operation on a screen selected from among the first screen and the second screen, and to receive an operation using a screen associated with the detected event out of the first screen and the second screen as a selected screen.

The display control unit may also display, as the image of the second application, an image of an application associated with the first application and a time slot including a time at which the event was detected.

The terminal may also include a measurement unit configured to measure a position of the terminal. The display control unit may also display, as the image of the second application, an image of an application associated with the first application and the position measured when the event was detected.

The terminal may also include an accumulation unit configured to accumulate records of combinations of applications with images displayed in the same time period on the first screen and the second screen. The display control unit may also display with greater priority, as the image of the second application, an image of an application that has a greater number of records of combination with the first application that was displayed when the event was detected.

Furthermore, a priority level may also be set for each event in an application, and if an image of an application is already being displayed on the second screen, the display control unit may also display the image of the second application on the second screen when the priority level of the second application is higher than that of the application.

### Effects of Invention

According to the present invention, it is possible to rapidly make an application available on a second screen in a terminal having two screens.

### Brief Description of Drawings

FIG. 1 is a diagram showing an external appearance of a smartphone according to an embodiment.
FIG. 2 is a diagram showing a hardware configuration of a smartphone.
FIG. 3 is a diagram showing examples of styles of a smartphone.
FIG. 4 is a diagram showing a functional configuration realized by a smartphone.
FIG. 5 is a diagram showing an example of a style detection table.
FIG. 6 is a diagram showing an example of an event detection table.
FIG. 7 is a diagram showing an example of a display app table.
FIG. 8 is a diagram showing an example of an app process table.
FIG. 9 is a diagram showing an example of an operation procedure for an app image display process.
FIG. 10 is a diagram showing an example of a display app table of a variation.
FIG. 11 is a diagram showing an example of a display app table of a variation.
FIG. 12 is a diagram showing an example of priority levels of applications.

### Description of Embodiments

### 1. Embodiment

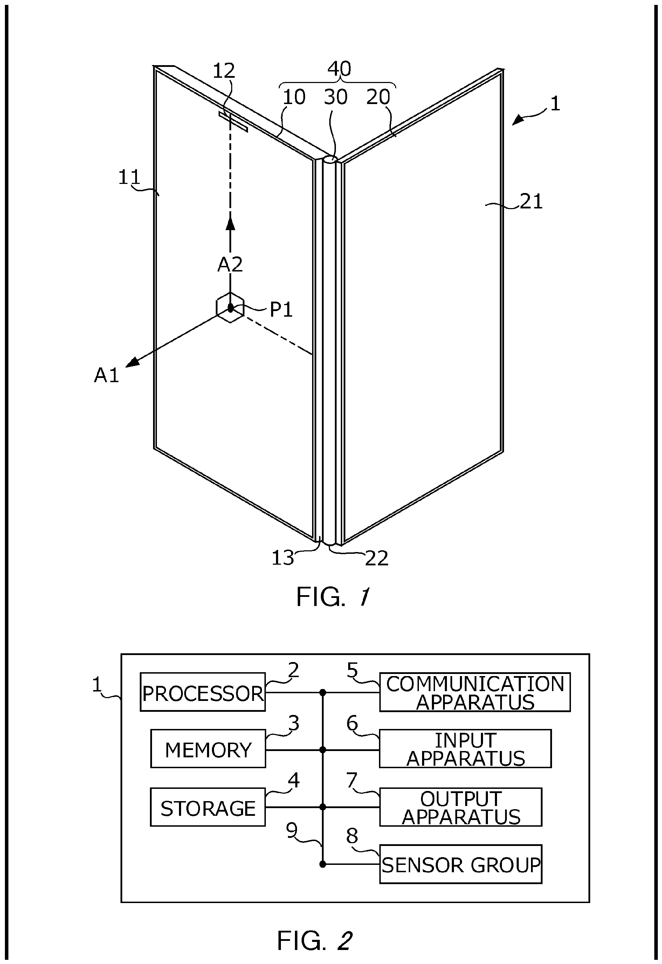

FIG. 1 shows an external appearance of smartphone 1 according to an embodiment. Smartphone 1 includes main body 40, which has first housing 10, second housing 20, and hinge 30. First housing 10 and second housing 20 are both cuboid plate-shaped housings. First housing 10 includes first screen 11, which has a rectangular shape, and second housing 20 has second screen 21, which has a rectangular shape. First housing 11 is provided with speaker port 12, from which telephone audio is output. First screen 11 and second screen 21 are screens of different housings, and are physically separated.

First housing 10 and first screen 11 are examples of the "first housing" and "first screen" of the present invention, and second housing 20 and second screen 21 are examples of the "second housing" and "second screen" of the present invention. Note that the terms "first" and "second" are used for convenience and there is no limitation to this correspondence relationship. For example, the housing in which speaker port 12 is provided may be the example of the "second housing" of the present invention, and the other housing may be the example of the "first housing" of the present invention.

Hinge 30 is a so-called hinge that rotatably joins first housing 10 and second housing 20. Hinge 30 includes a first rotating member and a second rotating member that can rotate about a rotation axis. End portion 13 on a long side of first screen 11 in first housing 10 is fixed to the first rotating member, and end portion 22 on a long side of second screen 21 in second housing 20 is fixed to the second rotating member.

Due to hinge 30 rotating, first housing 10 and second housing 20 rotate from a closed state in which the angle formed by first screen 11 and second screen 21 (hereinafter referred to as "hinge angle") is 0 degrees, through an open state in which the hinge angle is 180 degrees, to a state of being closed on the opposite side, in which the hinge angle is 360 degrees. With smartphone 1, first screen 11 and second screen 21 face outward when the hinge angle is 0 degrees and the housing is closed, and first screen 11 and second screen 21 face inward when the hinge angle is 360 degrees and the housing is closed.

Since first housing 10 and second housing 20 are both plate-shaped, the hinge angle is also the angle formed by first housing 10 and second housing 20. The hinge angle is a value expressing the degree of openness of main body 40, that is, the degree of openness of first housing 10 and second housing 20. When the hinge angle is set to 0 degrees or 360 degrees from 180 degrees, first housing 10 and second housing 20 are in a folded-up form. In this manner, hinge 30 foldably joins first housing 10 and second housing 20. Hinge 30 is an example of a "joining portion" of the present invention.

FIG. 2 shows a hardware configuration of smartphone 1. Smartphone 1 is a computer that includes the following apparatuses: processor 2, memory 3, storage 4, communication apparatus 5, input apparatus 6, output apparatus 7, sensor group 8, and bus 9. Most of these apparatuses are stored inside of main body 40 (some apparatuses have portions that are partially exposed to the outside, as with the screens). Note that the term "apparatus" used here can be replaced with "circuit", "device", "unit", or the like. One or more of each apparatus may be included, and some apparatuses may be omitted.

Processor 2 controls the computer as a whole by, for example, running an operating system. Processor 2 may also be constituted by a central processing unit (CPU) including an interface with peripheral apparatuses, a control apparatus, a computation apparatus, registers, and the like. Also, processor 2 reads out programs (program codes) including an OS (operating system) and various applications (hereinafter also referred to simply as "apps"), software modules, data, and the like from storage 4 and/or communication apparatus 5 to memory 3, and executes various types of processes in accordance therewith.

Processor 2 executes, for example, a browser, an SNS (Social Networking Service) app, an e-mail app, a telephone app, an address book app, a map app, a video playing app, a document browsing app, a document creation app, a camera app, and the like as the applications. There may be one, or two or more, processors 2 that execute the various types of processes, and two or more processors 2 may execute various types of processes simultaneously or sequentially. Processor 2 may be provided as one or more chips. The programs may be transmitted from a network over an electrical communication line.

Memory 3 is a computer-readable recording medium, and may be constituted by at least one of ROM (Read Only Memory), EPROM (Erasable Programmable ROM), EEPROM (Electrically Erasable Programmable ROM), RAM (Random Access Memory), and so on, for example. Memory 3 may be called a "register", "cache", "main memory" (a main storage apparatus), or the like. Memory 3 can store the aforementioned programs (program code), software modules, data, and the like.

Storage 4 is a computer-readable storage medium, and for example, may be constituted by at least one of a hard disk drive, a flexible disk, a flash memory (e.g., a card, a stick, or a key drive), a magnetic strip, or the like. Storage 4 may also be called an auxiliary storage apparatus. The above-described storage medium may also be, for example, a database, a server, or another suitable medium including memory 3 and/or storage 4.

Communication apparatus 5 is hardware (a transmission/reception device) for performing communication between computers over a wired and/or wireless network, and for example, is also referred to as a network device, a network controller, a network card, a communication module, or the like. Input apparatus 6 is an input device (e.g., a microphone, a switch, a button, a sensor, etc.) that receives input from the exterior.

Output apparatus 7 is an output device (e.g., a display, a speaker, an LED lamp, etc.) that carries out output to the outside. In smartphone 1, input apparatus 6 and output apparatus 7 are integrated to form a touch screen. These touch screens are provided in first screen 11 and second screen 21, and input operations performed by the user are received on both screens.

Sensor group 8 includes various types of sensors. Sensor group 8 includes, for example, a strain sensor provided in hinge 30 as a sensor for measuring the hinge angle indicating the above-described degree of openness of main body 40. This strain sensor is provided such that strain increases the greater the hinge angle is. Also, sensor group 8 includes, for example, a triaxial magnetic sensor as a sensor for measuring the inclination of main body 40.

The inclination of main body 40 is indicated by the six angles formed by two reference directions, the vertical direction, the south-north direction, and the east-west direction, and values calculated by a triaxial magnetic sensor indicate these six angles. In the present embodiment, as the two reference directions, the direction of a normal line extending from center P1 of first screen 11 shown in FIG. 1 is used as reference direction A1, and a direction extending from center P1 toward speaker port 12 along the long side of first screen 11 is used as reference direction A2.

Note that the sensors included in sensor group 8 are not limited to the above-described strain sensor and magnetic sensor, and any type of sensor may also be used thereas, as long as the sensor outputs a value indicating the degree of openness of main body 40 and the inclination of main body 40. Apparatuses such as processor 2 and memory 3 can access each other via bus 9, which is for communicating information. Bus 9 may also be constituted by a single bus, or may be constituted by a different bus for each apparatus.

Also, smartphone 1 may be configured including hardware such as microprocessors, DSPs (Digital Signal Processors), ASICs (Application Specific Integrated Circuits), PLDs (Programmable Logic Devices), FPGA (Field Programmable Gate Arrays), and the like, and some or all of the function blocks may be realized by that hardware. For example, processor 2 may be provided as at least one of these types of hardware.

Due to smartphone 1 being foldable and due to images being displayed on two screens, smartphone 1 is used with various degrees of openness of main body 40 (degree of openness of first housing 10 and second housing 20; indicated by the hinge angle) and inclinations of main body 40 (indicated by the orientation of reference direction A1 in the present embodiment). A degree of openness of main body 40, or a combination of a degree of openness of main body 40 and an inclination of main body 40 that is thought to be used particularly often is called a "style".

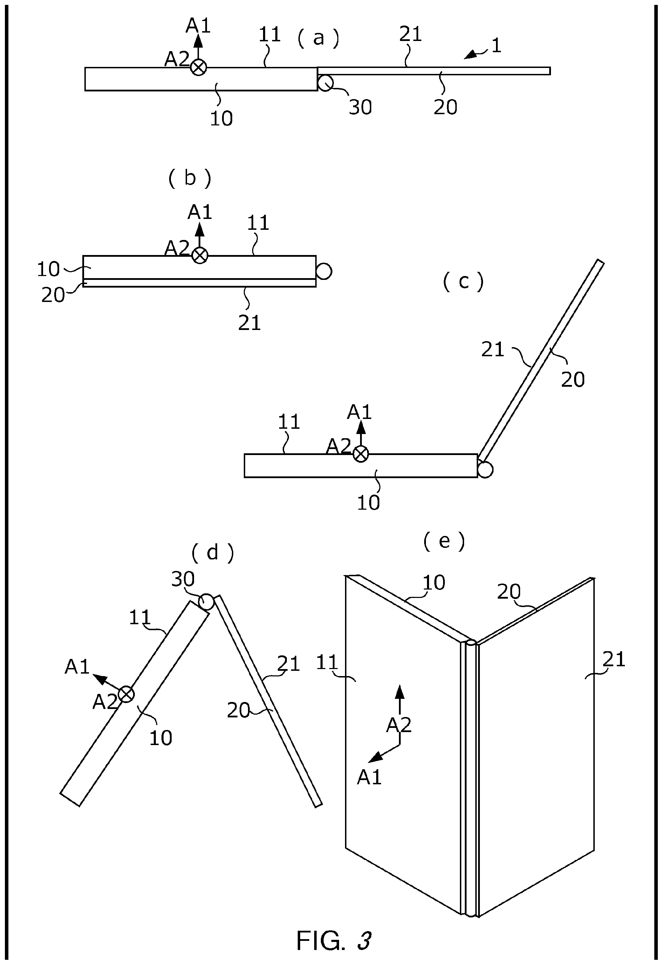

FIG. 3 shows examples of styles of smartphone 1. FIGS. 3(a) to 3(d) show smartphone 1 viewed in a longitudinal direction of hinge 30. A case in which the degree of openness (hinge angle) of main body 40 is 180 degrees as shown in FIG. 3(a) is called "fully-open style". In the fully-open style, first screen 11 and second screen 21 are arranged in parallel, and can be used also as one large screen. In the present embodiment, if the degree of openness of main body 40 is 180 degrees, this is considered the fully-open style, regardless of the inclination of main body 40.

A case in which the degree of openness of main body 40 is 0 degrees as shown in FIG. 3(b) is called "fully-closed style". In the present embodiment, this case is also considered to be the fully-closed style regardless of the inclination of main body 40. A case in which the degree of openness of main body 40 is about 240 degrees, reference direction A1, which indicates the inclination of main body 40, is vertically upward, and reference direction A2 is in the horizontal direction as shown in FIG. 3(c), is called a "laptop PC (personal computer) style" since it is similar to the form used when using a laptop PC.

In the laptop PC style, slight differences (e.g., ±20 degrees in the degree of openness of main body 40 and ±10 degrees in the inclination of main body 40) are allowed in the degree of openness of main body 40 and the inclination of main body 40. A case in which the degree of openness of main body 40 is about 60 degrees (e.g., ±10 degrees is allowed), reference direction A1, which indicates the inclination of main body 40, is approximately 30 degrees vertically upward with respect to the horizontal direction (e.g., ±10 degrees is allowed), and reference direction A2 is the horizontal direction (e.g., ±10 degrees is allowed) as shown in FIG. 3(d) is called "tent style" since it resembles the shape of a tent.

In FIG. 3(e), smartphone 1 viewed obliquely from above is shown. A case in which the degree of openness of main body 40 is about 90 degrees (e.g., ±45 degrees is allowed), reference direction A1, which indicates the inclination of main body 40, is in the horizontal direction (e.g., ±10 degrees is allowed), and reference direction A2 is vertically upward or vertically downward, that is, reference direction A2 is in the vertical direction (e.g., ±10 degrees is allowed) as shown in FIG. 3(e) is called "vertical style".

Processor 2 of smartphone 1 executes a program to control the units, and thereby a group of functions stated below are realized.

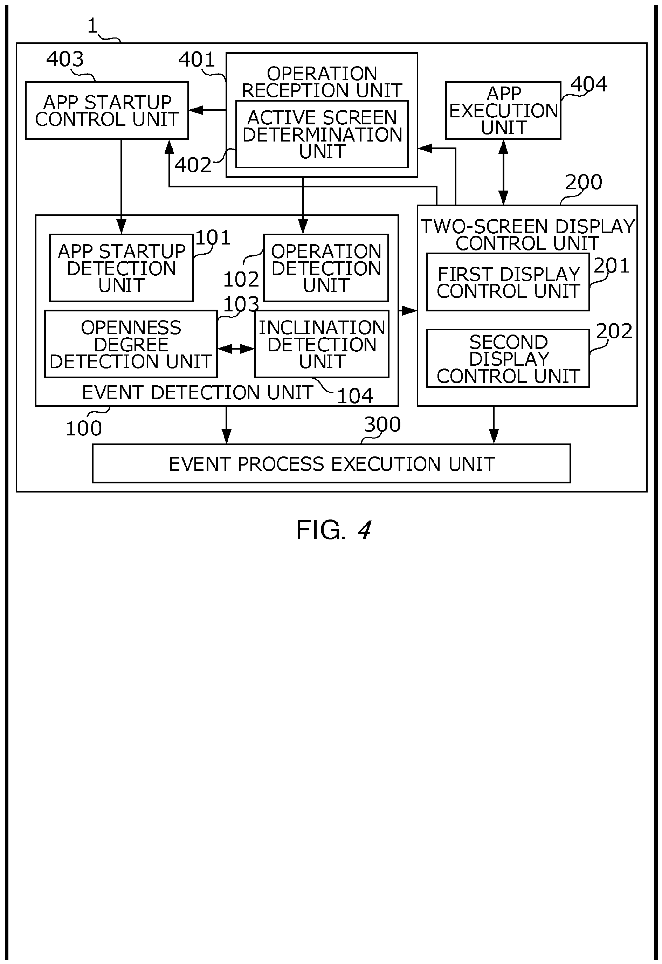

FIG. 4 shows a functional configuration realized by smartphone 1. Smartphone 1 includes event detection unit 100, which is an example of a "detection unit" of the present invention, two-screen display control unit 200, which is an example of a "display control unit" of the present invention, event process execution unit 300, which is an example of an "execution unit" of the present invention, operation reception unit 401, app startup control unit 403, and app execution unit 404.

Operation reception unit 401 receives user operations performed on the terminal (smartphone 1). Operation reception unit 401 receives user operations through the touch screens provided in first screen 11 and second screen 21 as described above. Operation reception unit 401 receives operations on a screen selected out of first screen 11 and second screen 21. Operation reception unit 401 is an example of a "reception unit" of the present invention.

The selected screen is a screen in a state in which all operations corresponding to the displayed image are received, and is a so-called active screen. On the other hand, a screen that has not been selected is a screen that is in a state in which no operation corresponding to the displayed image is received, and is a so-called inactive screen. However, operation reception unit 401 receives an operation of tapping an inactive screen as a switching operation for switching the inactive screen to an active screen. That is, the user can select an inactive screen as an active screen by tapping the inactive screen.

Operation reception unit 401 includes active screen determination unit 402. Active screen determination unit 402 determines which of first screen 11 and second screen 21 is currently the active screen. For example, active screen determination unit 402 performs this determination by storing a screen ID showing which of first screen 11 and second screen 21 is the active screen. If a screen ID indicating a screen that has received an operation has been stored, active screen determination unit 402 determines that that screen is the active screen.

Also, if a screen ID indicating a screen that has received an operation has not been stored, active screen determination unit 402 determines that that screen is an inactive screen, and overwrites the stored screen ID with the screen ID indicating that screen (the stored screen ID will be the screen ID of the new active screen). Note that the determination of the active screen may also be performed by, for example, associating a flag with the screen ID of the screen that is the active screen.

If it is determined by active screen determination unit 402 that the screen that has received the operation is the active screen, operation reception unit 401 supplies the app ID indicating that app to app startup control unit 403 when the operation is an operation for starting up an app. App startup control unit 403 reads out programs, data, parameters, and the like relating to the app identified by the supplied app ID and expands them to the memory, and thus starts up the app.

App execution unit 404 executes processes relating to the app started up by app startup control unit 403. App execution unit 404 provides an app image, which is an image that is prepared to be displayed on a screen in the app, to later-described two-screen display control unit 200. Provision of the app image may also be performed by supplying the data of the app image itself to two-screen display control unit 200, or may be performed by notifying two-screen display control unit 200 of the storage location of the app image.

Event detection unit 100 detects a predetermined event in the terminal (smartphone 1) (event detection unit 100 detects that a predetermined event has occurred). For example, as the events, event detection unit 100 detects that a predetermined app (SNS app, etc.) has been started up, and detects that a predetermined operation (an operation of searching for a store on a browser, etc.) has been performed using a predetermined app.

Also, event detection unit 100 detects that the terminal is in a predetermined style, as the event. Specifically, as predetermined events, event detection unit 100 detects that main body 40 has reached a predetermined degree of openness, and further detects that main body 40 is in a predetermined inclination, depending on the style. Event detection unit 100 also detects an event that is a combination of startup of a predetermined app, a predetermined operation, and a predetermined style.

Event detection unit 100 includes app startup detection unit 101, operation detection unit 102, openness degree detection unit 103, and inclination detection unit 104 as functions for detecting events. App startup detection unit 101 detects that a predetermined app (e.g., an SNS app, etc.) has been started up. In the present embodiment, app startup control unit 403 detects startup of a predetermined app in which an app screen is displayed on first screen 11.

When the app is started up, app startup control unit 403 supplies the app ID indicating the app and the screen ID of the screen on which the app image of the app is displayed to app startup detection unit 101. For example, app startup detection unit 101 stores a list of app IDs indicating predetermined apps, and if an app ID included in that list has been supplied together with the screen ID indicating first screen 11, app startup detection unit 101 detects that the predetermined app has been started up on first screen 11.

Operation detection unit 102 detects that a predetermined operation has been performed. In the present embodiment, operation reception unit 401 detects that a predetermined operation has been performed on a predetermined app whose app image is being displayed on first screen 11. For example, an operation of inputting a predetermined location name in a map app (place name input operation) or an operation of inputting a predetermined store name in a browser (store name input operation) is used as the predetermined operation.

In this case, operation reception unit 401 supplies the app ID of the app whose app image is being displayed on first screen 11 and a character string input through the received operation to operation detection unit 102. Operation detection unit 102 stores a list of sets of app IDs of predetermined apps and predetermined place names or predetermined store names, and if an app ID included in the list and a character string indicating a place name or store name included in the list is supplied, operation detection unit 102 detects that the above-described predetermined operation has been performed.

An operation unique to a predetermined app may also be used as a predetermined operation, and for example, an operation of playing a musical instrument in a musical instrument playing app (musical instrument playing operation) is used as a predetermined operation. In this case, operation reception unit 401 supplies the app ID indicating the app that has received the operation, and an operation ID indicating the operation, to operation detection unit 102. Operation detection unit 102 stores a list of sets of app IDs indicating predetermined apps and operation IDs indicating predetermined operations, and if a set of an app ID and an operation ID included in the list is supplied, operation detection unit 102 detects that a predetermined operation has been performed.

Note that the predetermined app for which the predetermined operation is detected as described above is newly started up in order to perform this operation in some cases, and is not newly started up in some cases. With smartphone 1, there are cases in which an app operates in the background and the app image is also held, even though the app image of the started-up app is not being displayed. For this reason, a predetermined operation is detected also when, for example, a browser that operates in the background is called, its app image is displayed, and a predetermined store name is input (in other words, startup of a predetermined app is not necessarily detected even if a predetermined operation is detected).

Based on the measurement results of sensor group 8, openness degree detection unit 103 detects that the degree of openness of main body 40 is a predetermined degree of openness. Based on the measurement results of sensor group 8, inclination detection unit 104 detects that the inclination of main body 40 is a predetermined inclination. In order to perform these detections, openness degree detection unit 103 and inclination detection unit 104 are used by storing a style detection table in which, for example, styles, degrees of openness of main body 40 (hinge angles), and inclinations of main body 40 (orientations of reference directions A1 and A2) are associated.

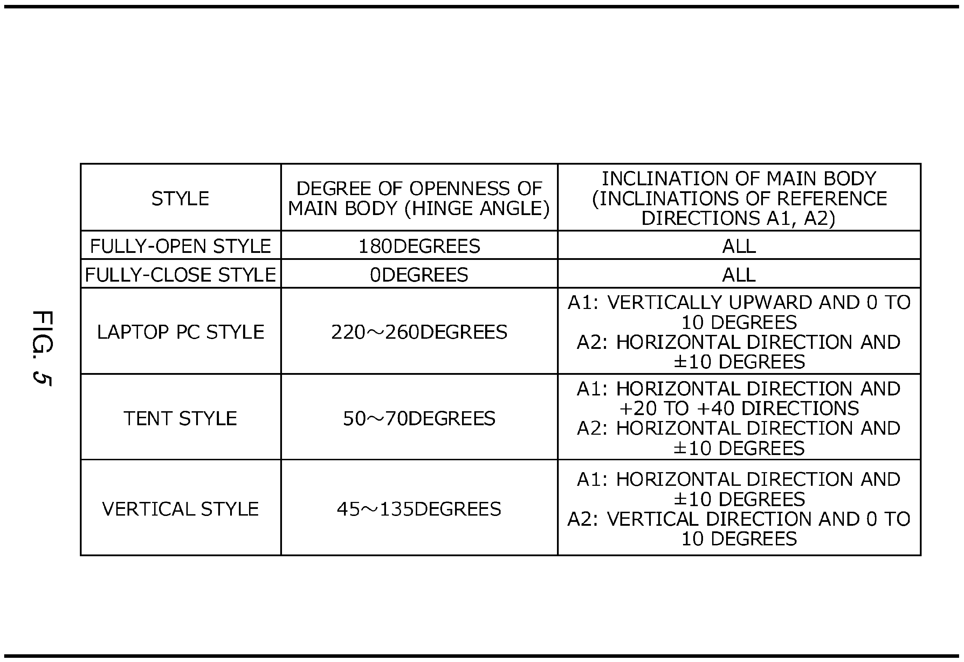

FIG. 5 shows an example of a style detection table. In the example of FIG. 5, "180 degrees" and "all" are associated with "fully-open style" as the degree of openness and inclination of main body 40, and "0 degrees" and "all" are associated with "fully-closed style" as the degree of openness an inclination of main body 40. "220 to 260 degrees" and "A1: vertically upward and 0 to 10 degrees; A2: horizontal direction and ±10 degrees" are associated with "laptop PC style" as the degree of openness and inclination of main body 40. "A1: vertically upward and 0 to 10 degrees" indicates that the angle formed by the orientation of reference direction A1 with respect to the vertically upward direction is a range of 0 degrees to 10 degrees.

"A2: horizontal direction and ±10 degrees" indicates that the orientation of reference direction A2 is an orientation in which the angle formed by the vertically upward direction with respect to the horizontal direction falls within up to 10 degrees (+10 degrees) and the angle formed vertically downward falls within up to 10 degrees (-10 degrees). "50 to 70 degrees" and "A1: horizontal direction and +20 to +40 degrees; A2: horizontal direction and ±10 degrees" are associated with "tent style" as the degree of openness and the inclination of main body 40, and "45 to 135 degrees" and "A1: horizontal direction and ±10 degrees; A2: vertical direction and 0 to 10 degrees" are associated with "vertical style" as the degree of openness and the inclination of main body 40.

If the hinge angle measured by the strain sensor of sensor group 8 is either an angle included in 0 degrees and 45 to 135 degrees, or an angle included in 180 degrees and 220 to 260 degrees, openness degree detection unit 103 detects that the degree of openness of main body 40 is a predetermined degree of openness. If it is detected that the degree of openness is 0 degrees or 180 degrees, the style is established regardless of the inclination of main body 40, and therefore the style (fully-closed style or fully-open style) associated with the detected degree of openness of main body 40 is detected.

Upon detecting that the degree of openness of main body 40 is a predetermined degree of openness, openness degree detection unit 103 notifies inclination degree unit 104 of the style corresponding to the detected degree of openness. If the above-described six angles formed by reference directions A1 and A2 measured by the magnetic sensor of sensor group 8 are included in the range of inclinations of main body 40 associated with the notified style, inclination detection unit 104 detects that the inclination of main body 40 is a predetermined inclination.

For example, if notification of the style "laptop PC style" has been performed, inclination detection unit 104 detects that the inclination of main body 40 is a predetermined inclination when the angle formed by reference direction A1 and the vertically upward direction is 0 to 10 degrees and the angle formed by reference direction A2 and the horizontal direction is ±10 degrees. In this manner, in the present embodiment, detection by inclination detection unit 104 is performed only when detection is performed by openness degree detection unit 103. Accordingly, when detection is performed by inclination detection unit 104, the style associated with the combination of the detected openness degree of main body 40 and the inclination of main body 40 is detected.

Event detection unit 100 detects an event based on the above-described detection results. In order to perform this detection, event detection unit 100 stores and uses an event detection table in which apps whose startup has been detected (startup detection apps), operations that have been detected (detected operations), and styles that have been detected (detected styles) are associated with events.

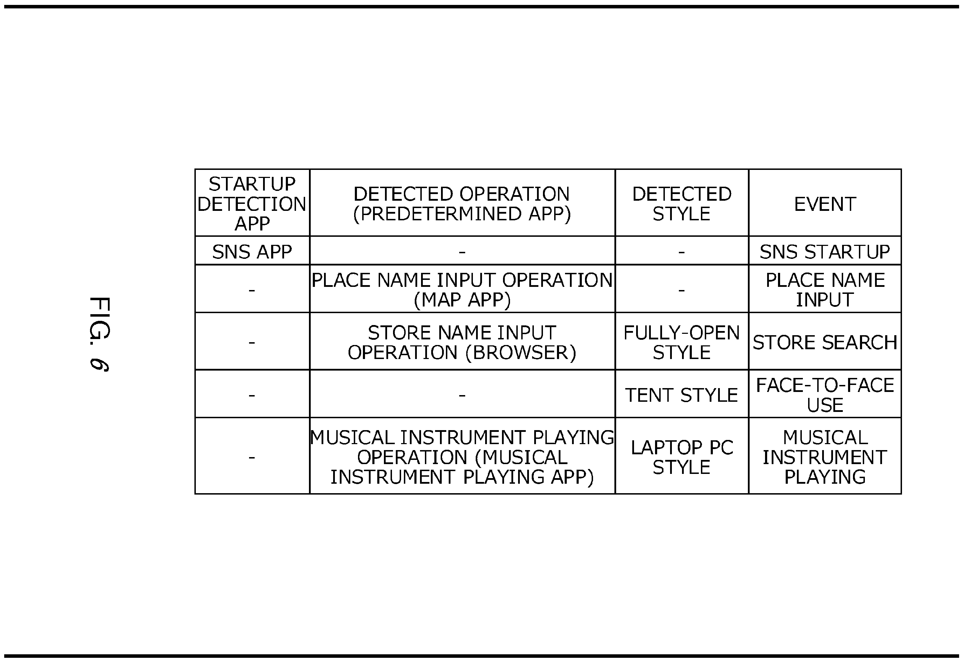

FIG. 6 shows an example of an event detection table. In the example of FIG. 6, predetermined apps are also shown for detected operations.

For example, an event "SNS startup" is associated with the detected app "SNS app". Similarly, an event "place name input" is associated with the detected operation "place name input operation (map app)", and an event "store search" is associated with the detected operation "store name input operation (browser)" and the detected style "fully-open style". Also, the event with the name "face-to-face use" is associated with the detected style "tent style", and the event with the name "musical instrument playing" is associated with the detected operation "musical instrument playing operation (musical instrument playing app)" and the detected style "laptop PC style".

Event detection unit 100 detects events associated with the above-described detection results in the event detection table. Event detection unit 100 detects the event "SNS startup" when, for example, "SNS app" is detected by app startup detection unit 101, and the event "face-to-face use" is detected when a degree of opening and an inclination indicating "tent style" are detected by the openness degree detection unit 103 and the inclination detection unit 104.

Also, if multiple detection results are obtained within a predetermined period, event detection unit 100 determines that the detection results were obtained at the same time. For example, if "store name input operation" and "fully-open style" are detected within a predetermined period, event detection unit 100 determines that they were detected at the same time, and detects the event "store search", which is associated with the detection results in the event detection table. Upon detecting an event in this manner, event detection unit 100 supplies the detection result to two-screen display control unit 200 and event process execution unit 300.

Two-screen display control unit 200 performs control for displaying the above-described app image (image prepared to be displayed on the screen in the app) to first screen 11 and second screen 21. Two-screen display control unit 200 displays the app image of the app started up through the startup operation performed using the active screen on the active screen. Two-screen display control unit 200 includes first display control unit 201 and second display control unit 202.

First display control unit 201 displays the app image on first screen 11, and second display control unit 202 displays the app image on second screen 21. That is, if first screen 11 is the active screen, the app image of the app that was started up is displayed on first screen 11 by first display control unit 201, and if second screen 21 is the active screen, the app image of the app that was started up is displayed on second screen 21 by second display control unit 202.

In the present embodiment, if an event is detected by event detection unit 100, two-screen display control unit 200 displays an app image (hereinafter referred to as "second app image") of a second application corresponding to the first application when the app image (hereinafter referred to as "first app image") of the predetermined first application is displayed on first screen 11. In this case, in the present embodiment, the state of second screen 21 (e.g., another app image being displayed or the like) is not given consideration.

Two-screen display control unit 200 stores a display app table in which events, first apps (first applications), and second apps (second applications) are associated with each other.

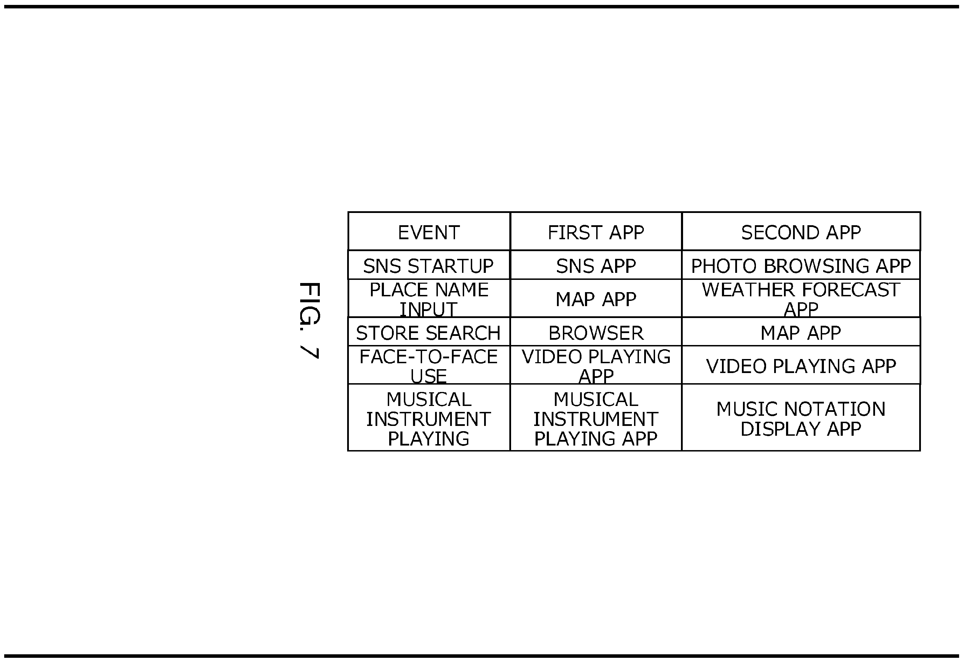

FIG. 7 shows an example of a display app table. In the example of FIG. 7, "SNS app" and "photo browsing app" are associated with the event "SNS startup" as the first app and the second app.

Similarly, "map app" and "weather forecast app" are associated with "place name input" as the first app and the second app, and "browser" and "map app" are associated with "store name search" as the first app and the second app. Also, "video playing app" is associated with "face-to-face use" as the first app and the second app, and "musical instrument playing app" and "music notation display app" are associated with "musical instrument playing" as the first app and the second app.

Since the app image of the started-up SNS app is displayed as the first app image by first display control unit 201 when the supplied event detection results indicate SNS startup (that is, when SNS startup is detected as the event), two-screen display control unit 200 (second display control unit 202) displays, as the second app image, the app image of the photo browsing app, which is the second app associated with the event "SNS startup" and the first app "SNS app" in the display app table, on second screen 21.

If the second app has already been started up and is operating in the background, two-screen display control unit 200 (second display control unit 202) calls the second app and displays the held second app image on second screen 21. Also, two-screen display control unit 200 (second display control unit 202) requests startup of the second app to app startup control unit 403 if the second app has not been started up. Upon receiving the request, app startup control unit 403 starts up the requested second app. Two-screen display control unit 200 (second display control unit 202) displays the second app image of the second app started up in this manner on second screen 21.

Also, when place name input is detected as an event, the app image of the map app is displayed as the first app image by first display control unit 201 on first screen 11, which has received an operation of inputting a place name, which is the event, and therefore two-screen display control unit 200 (second display control unit 202) displays the app image of the weather forecast app associated in the display app table with place name input and the map app on second screen 21.

Also, when face-to-face use is detected as the event, two-screen display control unit 200 (second display control unit 202) determines whether or not there is an app that is currently being displayed on first screen 11 by first display control unit 201, and if it is determined that there is, two-screen display control unit 200 determines whether or not that app is the video playing app, which is the first app associated with the event "face-to-face use".

If it is determined that the video playing app is being displayed on first screen 11, two-screen display control unit 200 (second display control unit 202) displays the app image of the video playing app associated in the display app table with these events and the first app on second screen 21. Upon displaying the second app image in this manner on second screen 21, two-screen display control unit 200 notifies event process execution unit 300 of this fact.

If an event is detected by event detection unit 100 and the second app image has been displayed, event process execution unit 300 executes the process associated with the detected event among the processes performed by the second app. Event process execution unit 300 stores an app process table in which events and processes of second apps to be executed (app processes) are associated with each other.

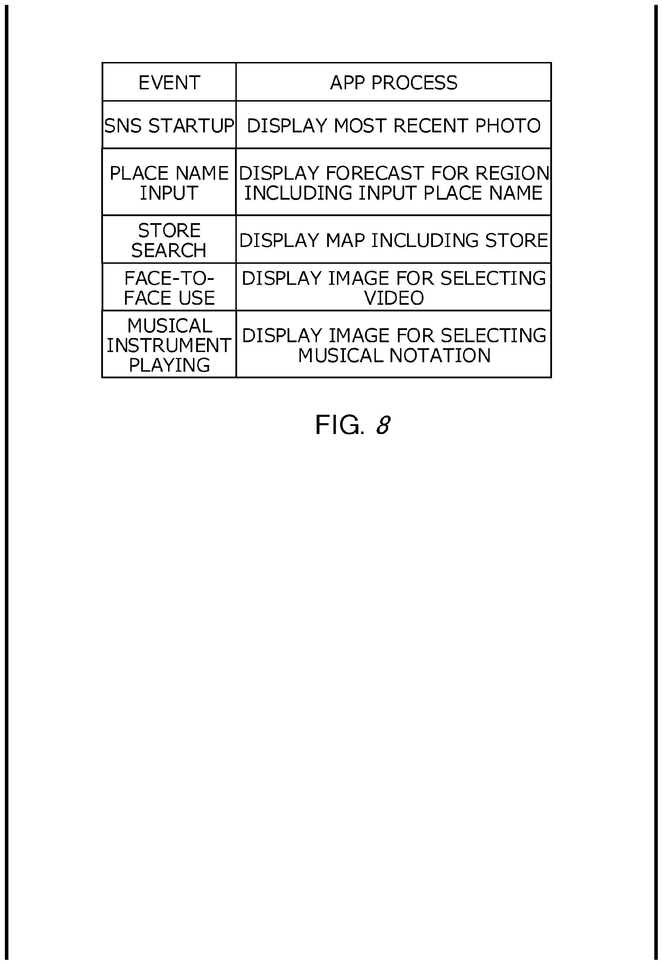

FIG. 8 shows an example of the app process table. In the example of FIG. 8, the app process "display most recent photo" is associated with the event "SNS startup". Similarly, the app process "display forecast of region including input place name" is associated with the event "place name input", the app process "display map including store" is associated with the event "store name input", the app process "display image for selecting video" is associated with the event "face-to-face use", and the app process "display image for selecting musical notation" is associated with the event "musical instrument playing".

If, for example, SNS startup is detected as the event, upon receiving notification of the fact that the photo browsing app has been displayed on second screen 21 from two-screen display control unit 200, event process execution unit 300 executes a process for displaying the most recent stored photo in the photo browsing app as the app process associated with the event. Also, if face-to-face use is detected as the event, upon receiving notification of the fact that the video playing app has been displayed on second screen 21 from two-screen display control unit 200, event process execution unit 300 executes a process for displaying an image for selecting a video on the video playing app as the app process associated with the event.

The above-described events are detected when an operation is performed on first screen 11, or when an operation of changing the degree of openness and the inclination of main body 40 is performed. Accordingly, when a predetermined event is detected, two-screen display control unit 200 (second display control unit 202) displays the second app image on second screen 21 even if an operation for starting up the second app and an operation for displaying the second app image are not performed on second screen 21.

For this reason, even if first screen 11 is the active screen when the event is detected, an active screen switching operation (operation on second screen 21) is not performed, and therefore first screen 11 is kept as the active screen. Note that if "face-to-face use", which is associated with only the style in the event detection table shown in FIG. 6, is detected, second screen 21 is the active screen in some cases.

In the present embodiment, if the second app image is displayed when second screen 21 has been selected in this manner, operation reception unit 401 switches the selected screen (active screen) to first screen 11 and receives the operation. In this case, upon displaying the second app image associated with the event, two-screen display control unit 200 notifies operation reception unit 401 of that fact.

If the screen ID of second screen 21 has been stored as the screen ID of the active screen when this notification is received, active screen determination unit 402 of operation reception unit 401 overwrites that screen ID with the screen ID of first screen 11. Thus, in the present embodiment, even after the second app image is displayed, operation reception unit 401 receives operations constantly using first screen 11 as the selected screen (active screen).

Based on the above-described configuration, smartphone 1 performs an app image display process for displaying the second app image when an event is detected.

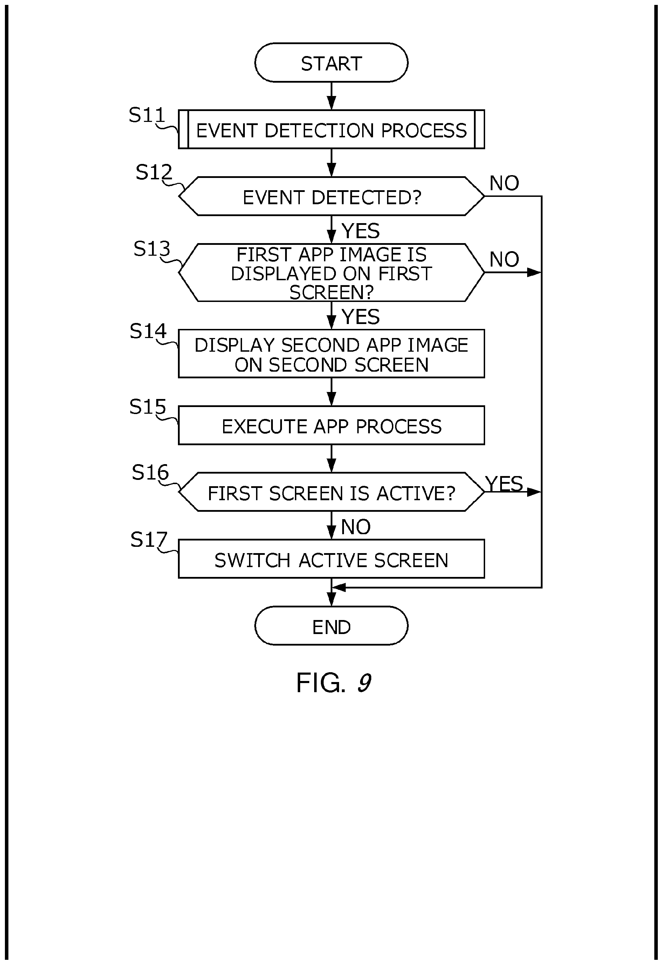

FIG. 9 shows an example of an operation procedure for app image display process. This operation procedure is started due to the power source of smartphone 1 being turned on, and is performed repeatedly at a predetermined time interval (e.g., every 0.5 seconds or the like).

First, smartphone 1 (event detection unit 100) performs a process (event detection process) for detecting the above-described event. Next, smartphone 1 (two-screen display control unit 200) determines whether or not the event was detected (step S12), and if it is determined that no event was detected (NO), this operation procedure ends. If it is determined in step S12 that an event was detected (YES), smartphone 1 (two-screen display control unit 200) determines whether or not the first app image is being displayed on first screen 11 (step S13).

If it is determined in step S13 that the first app image is not being displayed (NO), smartphone 1 (two-screen display control unit 200) ends the operation procedure. If it is determined in step S13 that the first app image is being displayed (YES), smartphone 1 (two-screen display control unit 200) displays the second app image of the second app corresponding to the detected event and the first app whose first app image is being displayed (step S14).

Next, smartphone 1 (event process execution unit 300) executes an app process of a second app associated with the detected event (step S15). Next, smartphone 1 (operation reception unit 401) determines whether or not first screen 11 is active (step S16), and if it is determined that first screen 11 is active (YES), the operation procedure ends. If it is determined in step S16 that first screen 11 is not active (NO), smartphone 1 (operation reception unit 401) switches the active screen from second screen 21 to first screen 11 (step S17) and ends the operation procedure.

In the present embodiment, if the above-described predetermined event is detected and the first app image is being displayed on first screen 11 in smartphone 1, which is a foldable terminal having two screens, the second app image of the second app corresponding to the events and the first app is displayed. Accordingly, it is possible to rapidly make an app available on a second screen (second screen 21 in the present embodiment) without performing an operation for displaying the second app image.

Also, in the present embodiment, a specific style is detected as an event, and for example, the fully-open style is detected if the degree of openness of the main body is a predetermined degree of openness (the hinge angle is 180 degrees). Accordingly, when the user wants to use the first app and the second app associated with the first app, the user can start up the second app by merely changing the degree of openness of the main body.

Also, the tent style is indicated by the inclination of the main body, in addition to the degree of openness of the main body. Accordingly, the number of types of apps that can be started up as the second app can be increased compared to the case where only a style indicated by only the degree of openness of the main body is detected.

Also, in the present embodiment, the app process associated with a detected event is executed when the second app screen of the second app associated with the event is displayed. Accordingly, if the process that is to be performed first has been determined overall in the displayed second app, it is possible to eliminate labor performed by the user who executes the process.

Also, for example, when second screen 21 is operated to start up the second app and the second app image is displayed, second screen 21 becomes active. In contrast to this, in the present embodiment, the state in which first screen 11 is the active screen is maintained, even if the second app image is displayed on second screen 21. Accordingly, compared to the case where the second app is started up using an operation on second screen 21, it is possible to rapidly make an operation on the first app available even if the second app image is displayed.

### 2. Variations

The above-described embodiment is merely an example of carrying out the present invention, and may be modified as follows.

### 2-1. First App and Second App

In the embodiment, if an event was detected, two-screen display control unit 200 displayed the second app image on second screen 21 when the first app image was being displayed on first screen 11. However, there is no limitation to this, and for example, conversely, if an event is detected, the second app image may also be displayed on first screen 11 when the first app image is displayed on second screen 21.

For example, in smartphone 1, the app image of the telephone app is displayed only on first screen 11, which is provided with speaker port 12. In order to use the telephone app as the second app in this case, it is sufficient that the app displayed on second screen 21 is the first app, and that the app image of the telephone app is displayed as the second app on first screen 11.

In the above-described two examples, if the first app image is displayed on one screen that is determined when an event is detected, the second app image is displayed on the other screen, but the second app image is not displayed on the one screen even if the first app image is already being displayed on the other screen. However, if the first app image is already being displayed on the other screen, the second app image may also be displayed on the one screen.

In this case, if an event is detected, two-screen display control unit 200 displays the second app image on the other screen when the first app image is being displayed on any one of first screen 11 and second screen 21. In either case, the app can be rapidly made available on the second screen, similarly to the embodiment.

### 2-2. Designation of Display Screen by App

Some apps are designated to be displayed on first screen 11 or second screen 21. For example, the telephone app is set such that an app image is displayed on first screen 11, which is provided with speaker port 12. Similarly, the camera app is set to display an app image on first screen 11 when, for example, a lens of a camera is provided on second screen 21 side.

If the app for which the screen on which to perform display has been designated in this manner is the second app, two-screen display control unit 200 displays the second app image on the designated screen. For example, when the event "SNS startup" has been detected in the example of FIG. 7, two-screen display control unit 200 displays the second app image on second screen 21 as-is if the second app is the photo browsing app, and two-screen display control unit 200 displays the second app image on first screen 11, which has been set as the screen on which to display the app image of the camera app, if the second app is the camera app.

### 2-3. Consideration of Time Slot

Two-screen display control unit 200 may also consider a time slot when determining the app whose app image is to be displayed. In the present embodiment, two-screen display control unit 200 displays, as the second app image, the app image of the second app, which is associated with the first app and a time slot including the time at which the event was detected.

In this case, two-screen display control unit 200 stores a display app table in which events, time slots, first apps, and second apps are associated with each other.

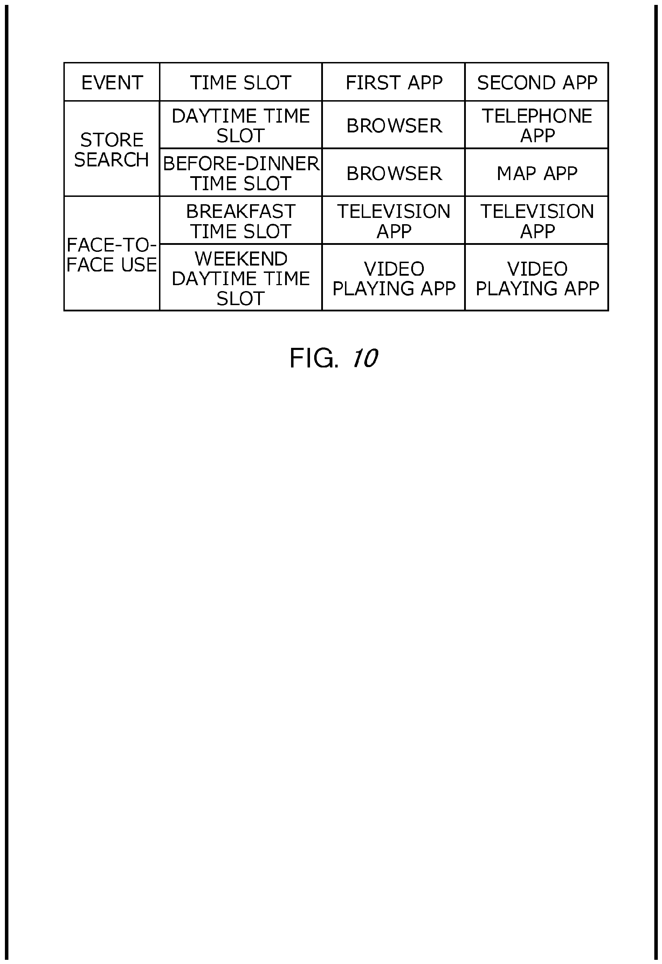

FIG. 10 shows an example of a display app table of the present variation. In the example of FIG. 10, "browser" and "telephone app" are associated with "store search" in the "daytime time slot", and "browser" and "map app" are associated with "store search" in the "before-dinner time slot", as the first apps and the second apps.

Also, a "television app" is associated with "tent style" as both the first app and the second app in the "breakfast time slot", and the "video playing app" is associated with "tent style" as both the first app and the second app in the "weekend daytime time slot". For example, if store search is detected in the before-dinner time slot and the app image of the browser, which is associated with store search, is being displayed on first screen 11 as the first app image, two-screen display control unit 200 uses the map app as the second app, and displays the second app image on second screen 21.

Also, for example, if store search is detected in the breakfast time slot and the app image of the browser associated with store search is being displayed as the first app image, two-screen display control unit 200 uses the telephone app as the second app and displays the second app image. Note that as stated in the above-described variation, it is determined that the telephone app is to display the app image on first screen 11, and therefore in this case, the second app image is displayed on first screen 11 when the first app image is being displayed on second screen 21.

According to the example of FIG. 10, if there is an app that is often used in a specific time slot, that app can be made available more rapidly compared to other apps in that time slot. Note that in the present variation, when a predetermined event is detected and the second app image of the second app is displayed, event process execution unit 300 may also execute the process associated with the detected event and the time slot including the time at which the event was detected, among the processes performed by the second app.

For example, if face-to-face use is detected and the television app is displayed as the second app image, event process execution unit 300 executes a process for switching to a channel of a news program if the time slot is the breakfast time slot, and executes a process for switching to a channel of a variety program if the time slot is the dinner time slot. Thus, it is possible to eliminate labor of a user who executes a process if the process that is to be performed first in an app that is often used in a specific time slot has approximately been determined.

### 2-4. Consideration of Position

When the app whose app image is to be displayed is to be determined, two-screen display control unit 200 may also give consideration to the current, past, or future position of the smartphone. In the present variation, sensor group 8 shown in FIG. 2 functions as a measurement unit for measuring the position of the terminal, such as a GPS (Global Positioning System).

Two-screen display control unit 200 displays, as the second app image, the app image of the second app, which is associated with the first app and the current position measured when the event is detected. In this case, two-screen display control unit 200 stores a current position table in which position information measured by sensor group 8, and current positions, such as office, home, downtown, and station, are associated with each other.

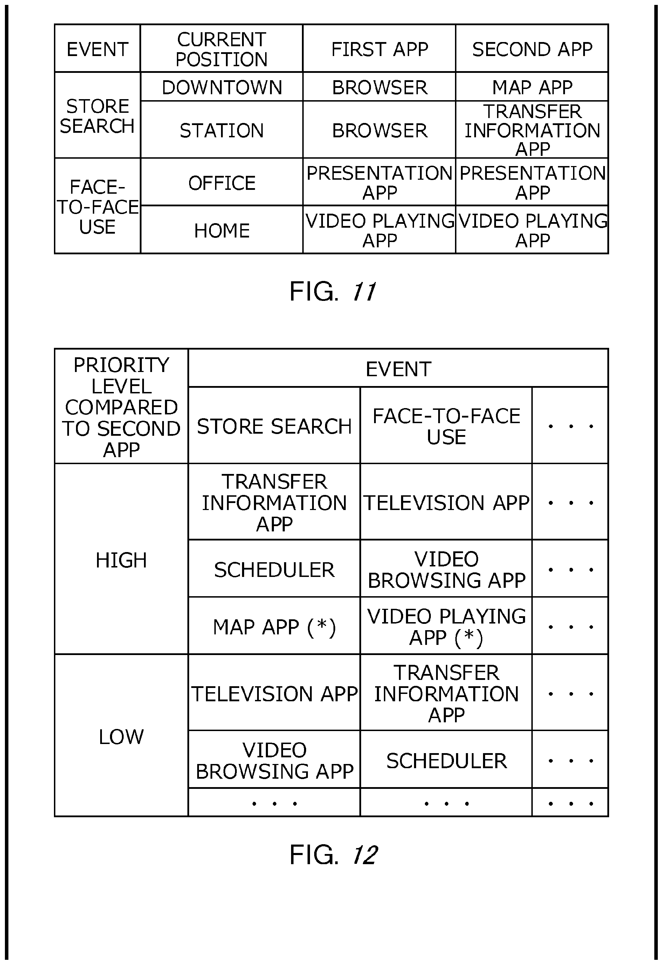

FIG. 11 shows an example of a display app table of the present variation. In the example of FIG. 11, in "store search", "browser" and "map app" are associated with the current position "downtown" as the first app and the second app, and "browser" and "transfer information app" are associated with the current position "station" as the first app and the second app. Also, in "face-to-face use", "presentation app" is associated with the current position "office" as both the first app and the second app, and "video playing app" is associated with the current position "home" as both the first app and the second app.

For example, if store search is detected when the current position of smartphone 1 is "downtown" and the app image of the browser associated therewith is displayed on first screen 11 as the first app image, two-screen display control unit 200 displays the app image of the map app, which is the second app associated with "downtown", as the second app image on second screen 21. Also, when the current position is not "downtown" but "station", two-screen display control unit 200 displays the app image of the transfer information app associated with "station" as the second app image on second screen 21.

According to the example of FIG. 11, if there is an app that is often used at a specific location, that app can be made available more rapidly compared to other apps at that location. Note that in the present variation, when a predetermined event is detected and the second app image of the second app is displayed, event process execution unit 300 may also execute the process associated with the above-described current position, among the processes to be executed by the second app.

If, for example, the current location is downtown, "store search" is detected, and the second app image of the map app is displayed, event process execution unit 300 executes a process for displaying a map of the surrounding area of the current location as the process associated with downtown, and if the current location is the station, "store search" is detected, and the second app image of the transfer information app is displayed, event process execution unit 300 executes a process for inputting the nearest station as the station name of the departure point, as the process associated with the station. Accordingly, if the process that is to be performed first is approximately determined for an app that is often used at a specific location, it is possible to eliminate the labor of the user executing the process.

### 2-5. Active Screen

Operation reception unit 401 need not receive an operation by constantly using first screen 11 as the active screen after the second app image is displayed. For example, if an event is detected by event detection unit 100 and the second app image is displayed by two-screen display control unit 200, operation reception unit 401 may constantly receive operations with second screen 21 set as the selected screen (active screen).

This operation is executed by active screen determination unit 402 of operation reception unit 401 overwriting the screen ID of the active screen with the screen ID of second screen 21 if the screen ID of first screen 11 is stored as the screen ID when the second app image is displayed. Accordingly, the operation on the second app for which the second app screen is displayed can be made available more rapidly compared to the case where first screen 11 is set as the active screen.

Also, operation reception unit 401 may receive an operation by setting first screen 11 or second screen 21, which is associated with the detected event, as the active screen. In the example of FIG. 7, first screen 11 is set as the active screen if, for example, SNS startup, place name input, store search, or face-to-face use is detected as the event, and second screen 21 is set as the active screen if musical instrument playing is detected as the event. In either case, the operation after the two app images have been displayed can be rapidly performed by using, as the active screen, the screen on which the app image of the first app or the second app, whichever the user is likely to operate first, is to be displayed. 2-6. Degree of Openness and Inclination

The predetermined degree of openness and the predetermined inclination are not limited to those described in the embodiment. For example, the hinge angle indicating the predetermined degree of openness may also be changed (e.g., setting the degree of openness for the fully-open style to 175 degrees, 170 degrees, or the like instead of 180 degrees, etc.). Also, the angles that are allowed for the degrees of openness and the inclinations may also be changed (e.g., setting the allowance of ±10 degrees to ±5 degrees, ±15 degrees, or the like).

### 2-7. Style

The possible styles of the smartphone are not limited to those stated in the embodiment. For example, even the fully-open style may be a style in which the style used when placed on a floor (reference direction A1 is vertically upward), and the style used when held in a hand (reference direction A1 is slightly vertically upward with respect to the horizontal direction) are different from each other.

Also, even the fully-closed style may also be defined as a style in which the style used when held vertically (reference direction A2 is near vertically upward), and the style used when held horizontally (reference direction A2 is in the horizontal direction) are different from each other. In either case, display performed by two-screen display control unit 200 and an app process performed by event process execution unit 300 are executed when the degrees of openness and the inclinations of main body 40 that are unique to that style are determined and the combination of apps that are often used in that style are determined. Accordingly, labor of the user can be eliminated, and the app can rapidly be made available on a second screen.

In summary, in a terminal, it is sufficient that an application to be started up or content to be displayed on another screen is determined according to deformation of a housing that changes the relative positions of two or more screens, or according to a combination of the deformation and an orientation of the terminal.

### 2-8. Method for Setting First App and the Like

In the above-described examples, the first app, the second app, and the app process were determined in advance. However, for example, a first app, a second app, and an app process set by the user may also be used. Also, the user's app usage history may also be accumulated and the combination of apps that are often used by the user and a process that is often used may also be used as the first app, the second app, and the app process.

In the present embodiment, for example, two-screen display control unit 200 accumulates records of combinations of apps whose app images were displayed in the same time period on first screen 11 and second screen 21 (specifically, two-screen display control unit 200 stores the history in association with the app IDs of the apps). Two-screen display control unit 200 in this case is an example of an "accumulation unit" of the present invention. Also, two-screen display control unit 200 displays with greater priority an app image of an app with a greater number of records of combination with the first app displayed on first screen 11 when an event is detected, as the second app image on second screen 21. Two-screen display control unit 200 in this case is an example of a "display control unit" of the present invention.

Specifically, for example, two-screen display control unit 200 may also constantly display the app image of the app with the greatest number of records of combination with the first app as the second app image, and may also increase the probability of displaying an app image with a higher number of records of combination with the first app as the second app. Accordingly, the app image of an app that is used together with the first app more often by the user, that is, the app image of an app with a high likelihood of being used by the user displaying the first app is more likely to be displayed as the second app image, and that app can be rapidly made available.

In the present variation, app startup control unit 403 may also accumulate records of processes executed first by the user among the processes of the second app whose second app image is displayed, and when the predetermined event is detected and the second app image of the second app is displayed, event process execution unit 300 may also execute with greater priority a process with a greater number of accumulated records among the processes of the second app as the app process.

For example, if the user has most often performed an operation for displaying a place name search field when store search is detected and the image of the map app is displayed as the second app image, event process execution unit 300 executes a process for displaying the place name search field as the app process. This makes it possible to execute a process with a high likelihood of being executed by the user compared to other processes, as the app process.

In the above-described variation, the above-described records (records of combinations of apps and records of processes) may also be accumulated in association with the current time or the current location, and if an event is detected and the first app image is displayed, two-screen display control unit 200 may also display with greater priority, as the second app, an app with a greater number of records in which the time slot including the current time or the current position is the same, and event process execution unit 300 may similarly execute with greater priority a process with a greater number of records accumulated as the app process.

This makes it possible to make it easier to rapidly make available the app with the highest likelihood of being used in the current time slot or at the current location. Also, it is possible to make it more likely that a process with the highest likelihood of being executed by the user in the current time slot or at the current location will be executed as the app process.

### 2-9. State of Second Screen

In the present embodiment, the second app image was displayed without giving consideration to the state of the second screen, but it is also possible to give consideration to the state of the second screen. In the present variation, if the app image of some app is already being displayed on second screen 21 when an event is detected and the first app image is being displayed on first screen 11, two-screen display control unit 200 displays the second app image on second screen 21 when the priority level of the second app is higher compared to that of the first app. For example, the priority level of the app is set for each event.

FIG. 12 shows an example of priority levels of apps. In the example shown in FIG. 12, for example, "transfer information app", "scheduler", and "map app" are set to have a higher priority level compared to the second app in the event "store search", and "television app", "distributed video browsing app", and the like are set to have a lower priority level compared to the second app. Also, in the event "face-to-face use", "television app", "distributed video browsing app", and "video playing app" are set to have a higher level of priority compared to the second app, and "transfer information app", "scheduler", and the like are set to have a lower level of priority compared to the second app.

For example, if the television app, which has a lower priority level than the second app, is being displayed on second screen 21 when store search is detected and the first app image is displayed on first screen 11, two-screen display control unit 200 displays the app image of the map app, which is the second app, on second screen 21 as the second app image. However, if the transfer information app, which has a higher priority level than the second app is being displayed on second screen 21, two-screen display control unit 200 does not display the app image of the map app, which is the second app, on second screen 21.

On the other hand, even if the television app is being displayed on second screen 21, when face-to-face use is detected, the television app has a higher priority level than the second app, and therefore two-screen display control unit 200 does not display the app image of the video playing app, which is the second app, on second screen 21. Also, if the transfer information app is being displayed on second screen 21, the transfer information app has a lower priority level than the second app when face-to-face use is detected, and therefore two-screen display control unit 200 displays the app image of the video playing app, which is the second app, on second screen 21 as the second app image.

"Map app" in store search and "video playing app" in face-to-face use, which are denoted by the symbol "*" in the drawing, are apps that are the same as the second app. By setting the priority levels of these apps to be higher than that of the second app, the same second app image is prevented from being re-displayed when the second app image is already being displayed on second app 21. Note that the second app image may also be re-displayed by reducing the priority level or not setting the priority level for an app that is the same as the second app (this is because there is no change in the second app that is ultimately displayed).

In the present variation, by setting the priority level of an app that is highly likely to be used together with the first app when the predetermined event occurs, to be higher than that of the second app, it is possible to prevent the display from being switched to another app image (second app image) even though the app image of such an app was displayed.

### 2-10. Inclination of Main Body

The inclination of main body 40 may also be defined using a method different from that of the above-described embodiment. For example, there may also be one reference direction. If only reference direction A1 is used, the inclination of main body 40 is defined as the orientation of first screen 11, and if only reference direction A2 is used, the inclination of main body 40 is defined as the orientation in the up-down direction (direction along the long sides) of first screen 11.

A reference direction different from that of the embodiment may also be used. For example, the direction along the short sides of first screen 11 may also be used, and the direction of the normal line of second screen 21 may also be used. In summary, any reference direction may be used, as long as it is understood which way the front surface direction (direction of the normal line of the screen) and the up-down direction (longitudinal direction of the screen) are oriented for at least one of first screen 11 and second screen 21, which are included in main body 40. In summary, it is sufficient that the orientation of main body 40 is determined.

### 2-11. Joining Portion

Hinge 30 of smartphone 1 rotatably joined first housing 10 and second housing 20 such that the hinge angle changes from 0 degrees to 360 degrees, but hinge 30 may also join first housing 10 and second housing 20 such that the hinge angle changes in a suitable range therebetween. In the embodiment, hinge 30 joined first housing 10 and second housing 20 such that first screen 11 and second screen 21 face outward when the hinge angle is 0 degrees, but conversely, hinge 30 may also join first housing 10 and second housing 20 such that first screen 11 and second screen 21 face inward when the hinge angle is 0 degrees.

Also, deformation of the housing may occur using a joining mechanism other than a hinge.

### 2-12. Functional Configuration

The functional configuration of the smartphone is not limited to that shown in FIG. 4. For example, multiple functional blocks shown in FIG. 4 may also be integrated into one functional block. Also, if multiple functions are included in one functional block, some of the functions may also be divided and provided in new functional blocks.

To give a specific example, for example, openness degree detection unit 103 and inclination detection unit 104 may be combined together as a style detection unit for detecting the style of the smartphone, and the function of requesting startup of the second app to app startup control unit 403 may also be divided from two-screen display control unit 200, and a function of a startup request unit may be newly provided. In summary, it is sufficient that the same functions as those shown in FIG. 4 are realized by the functional configuration overall.

### 2-13. Category of Invention

The present invention can be applied not only to a smartphone, but also to, for example, a tablet terminal. The present invention can be applied as long as the terminal has two screens and realizes the functions shown in FIG. 4.

The present invention further includes an information processing method for realizing the above-described functions in a terminal, and a program for causing a computer to realize the information processing method. The program may be provided in the form of a recording medium such as an optical disk storing the program, or may be provided in a form in which it is downloaded to a computer via a network such as the Internet, installed, and made usable.

### 2-14. Processing Sequences, etc.

The processing sequences, procedures, flowcharts, and the like of the embodiments described in the specification may be carried out in different orders as long as doing so does not create conflict. For example, the methods described in the specification present the elements of a variety of steps in an exemplary order, and the order is not limited to the specific order presented here.

### 2-15. Handling of Input/Output Information, etc.

Information and the like that has been input/output may be saved in a specific location (e.g., memory), or may be managed using a management table. The information and the like that has been input/output can be overwritten, updated, or added to. Information and the like that has been output may be deleted. Information and the like that has been input may be transmitted to other apparatuses.

### 2-16. Software

Regardless of whether software is referred to as software, firmware, middleware, microcode, hardware description language, or by another name, "software" should be interpreted broadly as meaning commands, command sets, code, code segments, program code, programs, sub programs, software modules, applications, software applications, software packages, routines, subroutines, objects, executable files, execution threads, sequences, functions, and so on.

Additionally, software, commands, and so on may be exchanged over a transmission medium. For example, when software is transmitted from a website, a server, or another remote source using hardwired technologies such as coaxial cable, fiber optic cable, twisted pair cabling, or digital subscriber line (DSL), and/or wireless technologies such as infrared light, radio waves, or microwaves, these hardwired technologies and/or wireless technologies are included in the definition of "transmission medium".

### 2-17. Information and Signals

The information, signals, and so on described in the specification may be realized using any of a variety of different techniques. For example, data, instructions, commands, information, signals, bits, symbols, chips, and so on that may be referred to throughout all of the foregoing descriptions may be realized by voltages, currents, electromagnetic waves, magnetic fields or magnetic particles, photo fields or photons, or any desired combination thereof.

### 2-18. Meaning of "Based on"

The phrase "based on" used in the specification does not mean "based only on" unless specifically mentioned. In other words, the phrase "based on" means both "based only on" and "based at least on".

### 2-19. "And" and "Or"

In the specification, with respect to configurations that can be realized both as "A and B" and "A or B", a configuration described using one of these phrases may be used as a configuration described by the other of these phrases. For example, if the phrase "A and B" is used, "A or B" may be used as long as implementation is possible without conflicting with the other phrase.

### 2-20. Variations, etc. on Embodiments

The embodiments described in the specification may be used alone, may be combined, or may be switched according to how the invention is to be carried out. Additionally, notifications of predetermined information (e.g., a notification that "X is true") are not limited to explicit notifications, and may be carried out implicitly (e.g., the notification of the predetermined information is not carried out).

Although the foregoing has described the present invention in detail, it will be clear to one skilled in the art that the present invention is not intended to be limited to the embodiments described in the specification. The present invention may be carried out in modified and altered forms without departing from the essential spirit and scope of the present invention set forth in the appended scope of patent claims. As such, the descriptions in the specification are provided for descriptive purposes only, and are not intended to limit the present invention in any way.

### Reference Signs List

1...Smartphone, 8...Sensor group, 10...First housing, 11...First screen, 20...Second housing, 21...Second screen, 30...Hinge, 100...Event detection unit, 101...App startup detection unit, 102...Operation detection unit, 103...Openness degree detection unit, 104...Inclination detection unit, 200...Two-screen display control unit, 201...First display control unit, 202...Second display control unit, 300...Event process execution unit, 401...Operation reception unit, 402...Active screen determination unit, 403...App startup control unit, 404...App execution unit.

## Claims

1. A terminal comprising:
a first screen;
a second screen;
a detection unit configured to detect an event in the terminal; and
a display control unit configured to, if an event is detected, when an image of a first application is being displayed on the first screen, display an image of a second application that is associated with the first application on the second screen.

2. The terminal according to claim 1, further comprising
a main body including a first housing having the first screen, a second housing having the second screen, and a joining portion that foldably joins the first housing and the second housing,
wherein the detection unit detects the main body reaching a predetermined degree of openness as the event.

3. The terminal according to claim 2, wherein
the detection unit detects the main body further reaching a predetermined inclination as the event.

4. The terminal according to any one of claims 1 to 3, comprising
an execution unit configured to, if the event is detected and the image of the second application is displayed on the second screen, execute a process associated with the event among processes to be executed by the second application.

5. The terminal according to any one of claims 1 to 4, further comprising
a reception unit configured to receive an operation on a screen selected from among the first screen and the second screen, and to receive an operation using the first screen as a selected screen after the image of the second application is displayed.

6. The terminal according to any one of claims 1 to 4, further comprising
a reception unit configured to receive an operation on a screen selected from among the first screen and the second screen, and to receive an operation using a screen associated with the detected event out of the first screen and the second screen as a selected screen.

7. The terminal according to any one of claims 1 to 6, wherein
the display control unit displays, as the image of the second application, an image of an application associated with the first application and a time slot including a time at which the event was detected.

8. The terminal according to any one of claims 1 to 7, further comprising
a measurement unit configured to measure a position of the terminal,
wherein the display control unit displays, as the image of the second application, an image of an application associated with the first application and the position measured when the event was detected.

9. The terminal according to any one of claims 1 to 8, further comprising
an accumulation unit configured to accumulate records of combinations of applications with images displayed in the same time period on the first screen and the second screen,
wherein the display control unit displays with greater priority, as the image of the second application, an image of an application that has a greater number of records of combination with the first application that was displayed when the event was detected.

10. The terminal according to any one of claims 1 to 9, wherein
a priority level is set for each event in an application, and
if an image of an application is already being displayed on the second screen, the display control unit displays the image of the second application on the second screen when the priority level of the second application is higher than that of the application.
